# EUROPEAN PATENT APPLICATION

(11) **EP 2 696 172 A1**
(43) Date of publication of application: **12.02.2014**
(21) Application number: 12767579.1
(22) Date of filing: 19.03.2012
(51) Int. Cl.: G01D 5/245, F16C 19/06, F16C 35/067, F16C 41/00

(54) **ROLLING BEARING DEVICE WITH ROTATION DETECTION FUNCTION**

(30) Priority: 04.04.2011 JP 2011082413
(71) Applicant: NTN Corporation, Osaka-shi, Osaka 550-0003 (JP)
(72) Inventor: OMOTO, Kaoru, Kuwana-shi Mie 511-8678 (JP)
(74) Representative: Bugnion Genève
(86) International application number: PCT/JP2012/057061
(87) International publication number: WO 2012/137595

(57) **Abstract**

A rolling contact bearing device with rotation detection function, includes a rolling bearing, a sensor housing, an encoder and a sensor mount board. The rolling bearing is configured to come in contact with an outer peripheral surface of a shaft. The sensor housing that is annular includes a first axial segment forming a bearing mount segment configured to mount an outer ring of the rolling bearing. The sensor housing also includes a second axial segment forming an encoder accommodation segment that is axially offset from the bearing mount segment. The encoder may be accommodated in an interior space of the encoder accommodation segment. The encoder may rotate integrally with the shaft. The sensor mount board is configured to be positioned between the encoder accommodation segment and the encoder. The sensor mount board includes a sensor mounted thereon to sense the encoder.

## Description

### CROSS REFERENCE TO THE RELATED APPLICATIONS

This application is based on and claims the Convention priority to a Japanese patent application No. 2011-082413, filed April 4, 2011, the entire disclosure of which is herein incorporated by reference as a part of this application.

### BACKGROUND OF THE INVENTION

### (Field of the Invention)

The present invention relates to a rolling contact bearing device with rotation detection function, which may be used in an office machine such as a copy machine or a printer to sense rotation of a shaft while rotatably supporting the shaft.

### (Description of Related Art)

A rotation sensor-equipped bearing device may include a rolling bearing with an inner ring serving as a rotational member and with an outer ring serving as a stationary member. An encoder may be associated with the inner ring while a sensor housing may be associated with the outer ring. The sensor housing may bear a sensor that senses rotation of the encoder (see, for example, the Patent Documents 1 and 2 listed below). A sliding contact bearing device may also be furnished with rotation detection function (see, for example, the Patent Documents 3 and 4 listed below).
[Patent Document 1] JP Laid-open Patent Publication No. 2007-224968
[Patent Document 2] JP Laid-open Patent Publication No. H08-184603
[Patent Document 3] JP Laid-open Patent Publication No. 2006-266962
[Patent Document 4] JP Laid-open Patent Publication No. 2003-254347

### SUMMARY OF THE INVENTION

As noted above, a rolling contact bearing device may be equipped with a rotation sensor. However, in a conventional rotation sensor-equipped rolling contact bearing device, an encoder for the rotation sensor may be force-fitted to an inner ring of the bearing device, thus making detachment or removal of the encoder difficult. Thus, when failure or malfunction occurs in one of a rolling bearing and a rotation sensor, the replacement of the entire rotation sensor-equipped bearing device may be inevitable, since keeping the other non-failed or non-malfunctioning one of the rolling bearing and the rotation sensor for reuse is not possible. In a conventional rotation sensor-equipped bearing device, electrical wire(s) may be directly attached to a sensor without the interposition of a wiring connector. This may complicate the assembly process.

In a sliding contact bearing device, a rotation sensor may be incorporated into a sensor housing in undetachable or unremovable manner. In this case, similarly to the aforementioned rolling contact bearing device, keeping the rotation sensor for reuse may not be possible. A sliding bearing may generate a large amount of heat at its sliding surface, thus necessitating a lower value for the maximum acceptable rotational speed. The wear of its sliding surface may considerably depend, even under a fixed load condition, on the material of a shaft, the surface roughness of the shaft and its lubrication. This may result in inconsistency in service lifetime among the same model of bearing products which are mass-produced. For a longer service lifetime, regular supply of a lubricant to its sliding surface may be necessary. With these factors taken into consideration, a rolling bearing may be the desirable type of bearing to be included in a rotation sensor-equipped bearing device for application in an office machine such as a copy machine or a printer, because such an application involves a relatively small load, may require a bearing with a higher value for the maximum acceptable rotational speed, and may demand a bearing with a longer service lifetime.

An object of the present invention is to provide a rolling contact bearing device with rotation detection function, which can be easily disassembled to enable, when failure or malfunction occurs in one of a rolling bearing and a sensor mount board, the replacement of the failed or malfunctioning one of the rolling bearing and the sensor mount board, while keeping the other non-failed or non-malfunctioning one of the rolling bearing and the sensor mount board for reuse.

The present invention may provide a rolling contact bearing device with rotation detection function. The rolling contact bearing device includes a rolling bearing configured to come in contact with an outer peripheral surface of a shaft. The rolling contact bearing device also includes an annular sensor housing. The sensor housing includes a first axial segment forming a bearing mount segment configured to mount an outer ring of the rolling bearing. The sensor housing also includes a second axial segment forming an encoder accommodation segment that is axially offset from the bearing mount segment. The rolling contact bearing device also includes an encoder configured to be positioned in an interior space of the encoder accommodation segment in such a way to rotate integrally with the shaft. The rolling contact bearing device also includes a sensor mount board configured to be positioned between the encoder accommodation segment and the encoder, with the sensor mount board including a sensor mounted thereon to sense the encoder.

In the aforementioned configuration, the sensor housing includes axially arranged segments -- namely, the bearing mount segment and the encoder accommodation segment. An outer ring of the rolling bearing can be mounted to the bearing mount segment, while the encoder and the sensor mount board can be positioned in an interior space of the encoder accommodation segment. Such a configuration allows for easy separation of the rolling bearing and the sensor mount board from each other. This enables, when one of the rolling bearing and the sensor mount board fails or malfunctions, replacing only the failed or malfunctioning one and keeping the other non-failed or non-malfunctioning one for reuse. The use of a rolling bearing, instead of using a sliding bearing, can achieve a greater value for the maximum acceptable rotational speed. The use of a rolling bearing, instead of using a sliding bearing, can also prevent the material of the shaft from affecting the service lifetime of the bearing.

In one embodiment of the present invention, the sensor mount board preferably includes, at an end thereof facing away from the rolling bearing, a wiring connector configured to electrically connect the sensor with an electrical wire from an external component, and the sensor mount board is preferably configured to be detachably installed between the encoder accommodation segment and the encoder. The phrase "external component" used in this context refers to any component that is external to the rolling contact bearing device with rotation detection function. Such a configuration where the sensor mount board includes, at an end thereof facing away from the rolling bearing, the aforementioned wiring connector makes it easier to detachably position the sensor mount board between the encoder accommodation segment and the encoder.

In one embodiment of the present invention, the sensor mount board may be preferably configured to be detachably installed, from a side of the rolling contact bearing device that is remoter from the rolling bearing, between the encoder accommodation segment and the encoder. In such a configuration, the sensor mount board can be detachably installed, without being interrupted by the rolling bearing, between the encoder accommodation segment and the encoder.

In one embodiment of the present invention, the rolling bearing may be preferably configured to be detachably mounted, from a side of the rolling contact bearing device that is remoter from the encoder accommodation segment, to the bearing mount segment of the sensor housing. In such a configuration, the rolling bearing can be detachably mounted, without being interrupted by the encoder, to the sensor housing.

In a configuration where the rolling bearing is configured to be detachably mounted, from a side of the rolling contact bearing device that is remoter from the encoder accommodation segment, to the bearing mount segment of the sensor housing, the encoder may be preferably configured to be detachably installed in the interior space of the encoder accommodation segment, through an interior space of the bearing mount segment when the rolling bearing is not mounted to the bearing mount segment of the sensor housing. In such a configuration, the encoder in the interior space of the encoder accommodation segment is ready to be detached or removed, by detaching or removing the rolling bearing from the bearing mount segment of the sensor housing.

In a configuration where the rolling bearing is configured to be detachably mounted, from a side of the rolling contact bearing device that is remoter from the encoder accommodation segment, to the bearing mount segment of the sensor housing, the sensor housing may include a lock portion configured to lockingly engage an end face of the outer ring of the rolling bearing to axially lock the rolling bearing. In a variant, the outer ring may have an outer peripheral surface formed with a circumferential groove, and the sensor housing may include an engagement portion configured to engage the circumferential groove to axially lock the rolling bearing. In another variant, the outer ring may be configured to be force-fitted to the bearing mount segment of the sensor housing to axially lock the rolling bearing. Any one of these locking mechanisms can effectively achieve the axial locking of the rolling bearing.

In one embodiment of the present invention, the encoder may have an annular shape, in which the encoder has an inner peripheral surface, provided with an engagement flat projection having a flat surface end, protruding from a portion defined circumferentially of the inner peripheral surface and the engagement flat projection may be configured to engage a flat surface portion of a planar shape formed in a portion defined circumferentially of an outer peripheral surface of the shaft.. Such a mounting configuration that uses flat surfaces or so-called D-cut surfaces can also determine the phase or angle at which the encoder may be mounted to the shaft.

Where such a mounting configuration that uses D-cut surfaces is employed, the engagement flat projection of the encoder preferably has a portion axially protruding with respect to an end face of the encoder. In such a configuration where the engagement flat projection of the encoder has a portion axially protruding with respect to an end face of the encoder, this axially protrusion portion can be easily noticeable, thus facilitating the visual confirmation of the phase or angle at which the encoder is being mounted to the shaft.

In one embodiment of the present invention, the encoder may have a C-shaped cross section when cut perpendicularly to a central axis of the encoder, and the encoder may be configured to elastically deform in radially expanding fashion to mount to an outer periphery of the shaft. The radial thickness of such an encoder as well as the dimension of the circumferential gap of such an encoder can be appropriately adjusted to minimize the expansion of the encoder that may be caused by a centrifugal force during rotation, to keep a proper mounting force of the encoder. This allows the encoder to remain fixed to the shaft while maintaining an intended phase or angle at which the encoder is mounted to the shaft.

In a configuration where the encoder has such a C-shaped cross section as discussed above, the encoder may have a circumferential gap defining a point of origin of a circumferential phase of the encoder. This facilitates the visual confirmation of positioning of the point of origin.

In one embodiment of the present invention, the encoder may include an annular magnetized track configured for rotation detection including circumferentially arranged magnetic poles. In such a configuration, the rolling contact bearing device can be equipped with a simple rotation detection function, with which rotational speed and/or rotational phase can be sensed or determined.

The encoder may include a plurality of annular magnetized tracks for rotation detection, each including circumferentially arranged magnetic poles, with the magnetized tracks for rotation detection differing from each other in phase or pole pitch, and the sensor may comprise a plurality of sensors, each configured to perform sensing on the corresponding one of the magnetized tracks for rotation detection. In such a configuration, the rolling contact bearing device can be equipped not only with the aforementioned simple rotation detection function but also with an additional rotation detection function, with which rotational direction can be determined based on the phase difference between the sensing signals obtained from the aforementioned plurality of magnetized tracks for rotation detection.

The encoder may include a circumferential portion forming a magnetized portion for detection of point of origin, and the sensor may comprise a sensor configured to perform sensing on the magnetized portion for detection of point of origin. In such a configuration, the rolling contact bearing device can be equipped with a point-of-origin detection function, with which the point of origin can be detected once per single revolution of the shaft.

In one embodiment of the present invention, the rolling bearing may comprise a roller bearing including the outer ring, a retainer and rollers, and the rollers may be configured to come in contact with the shaft. With such a configuration where the rolling bearing comprises such a roller bearing, the rolling contact bearing device with rotation detection function can be employed at a site that is subject to a relatively large load.

The aforementioned rolling contact bearing device may be configured to support a shaft in an office machine. Examples of such an office machine may include a copy machine and a printer. An office machine may normally use a bearing that supports a relatively small load, may have needs for cost reduction, and may have a strong demand for reuse of its components. Hence, the present invention can be more effective because it enables the replacement of only component(s), such as a rolling bearing and a sensor mount board, having failure or malfunction, while keeping other component(s) for reuse.

The present invention encompasses any combination of at least two features disclosed in the claims, the specification and/or the drawings. In particular, the present invention encompasses any combination of at least two claims.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, as defined by the appended claims. In the accompanying drawings, like reference numerals are used to denote like parts throughout the several views, and:
Fig. 1A is a longitudinal cross sectional view of a rolling contact bearing device with rotation detection function, according to the first embodiment of the present invention;
Fig. 1B is a side view of Fig. 1A as viewed from the left hand side of Fig. 1A;
Fig. 2 is a fragmentary enlarged view of Fig. 1A, illustrating a feature that may be used to lock a rolling bearing;
Fig. 3A is a longitudinal cross sectional view of a sensor housing for the rolling contact bearing device with rotation detection function;
Fig. 3B is a side view of Fig. 3A as viewed from the left hand side of Fig. 3A;
Fig. 4A is a front elevational view of an encoder for the rolling contact bearing device with rotation detection function;
Fig. 4B is a side view of Fig. 4A as viewed from the left hand side of Fig. 4A;
Fig. 5A is a front elevational view of a sensor mount board for the rolling contact bearing device with rotation detection function;
Fig. 5B is a bottom view of Fig. 5A;
Fig. 6 is a longitudinal cross sectional view of a different feature that may be used to lock a rolling bearing;
Fig. 7 is a longitudinal cross sectional view of another different feature that may be used to lock a rolling bearing;
Fig. 8A is a front elevational view of a different encoder;
Fig. 8B is a side view of Fig. 8A as viewed from the left hand side of Fig. 8A;
Fig. 9A is a longitudinal cross sectional view of a rolling contact bearing device with rotation detection function, according to the second embodiment of the present invention;
Fig. 9B is a side view of Fig. 9A as viewed from the left hand side of Fig. 9A;
Fig. 10 is a fragmentary enlarged view of Fig. 9A, illustrating a feature that may be used to lock a rolling bearing;
Fig. 11 is a longitudinal cross sectional view of a different feature that may be used to lock a rolling bearing; and
Fig. 12 is a longitudinal cross sectional view of another different feature that may be used to lock a rolling bearing.

### DESCRIPTION OF THE EMBODIMENTS

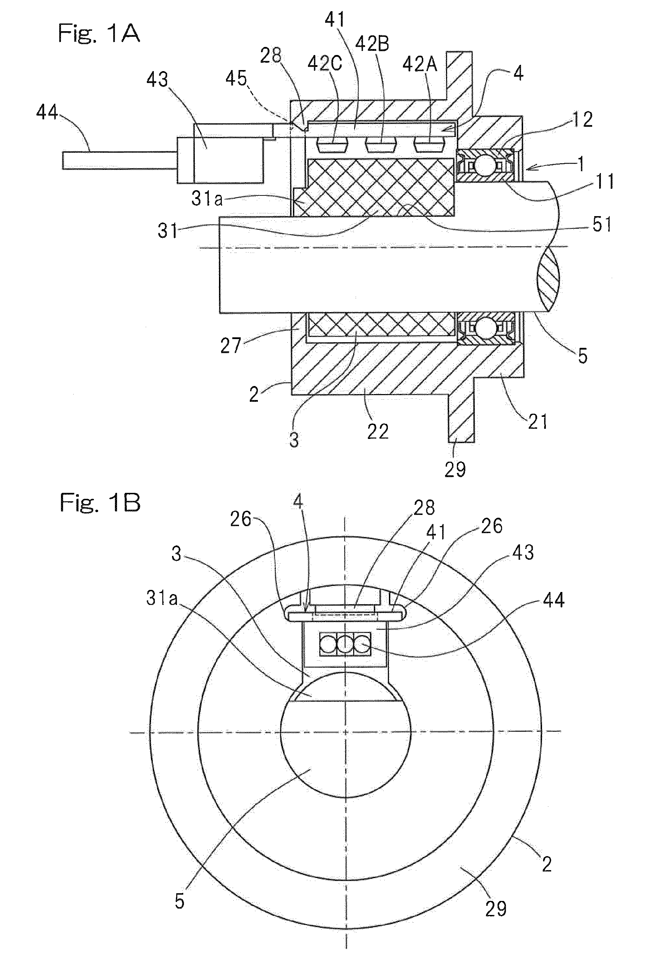

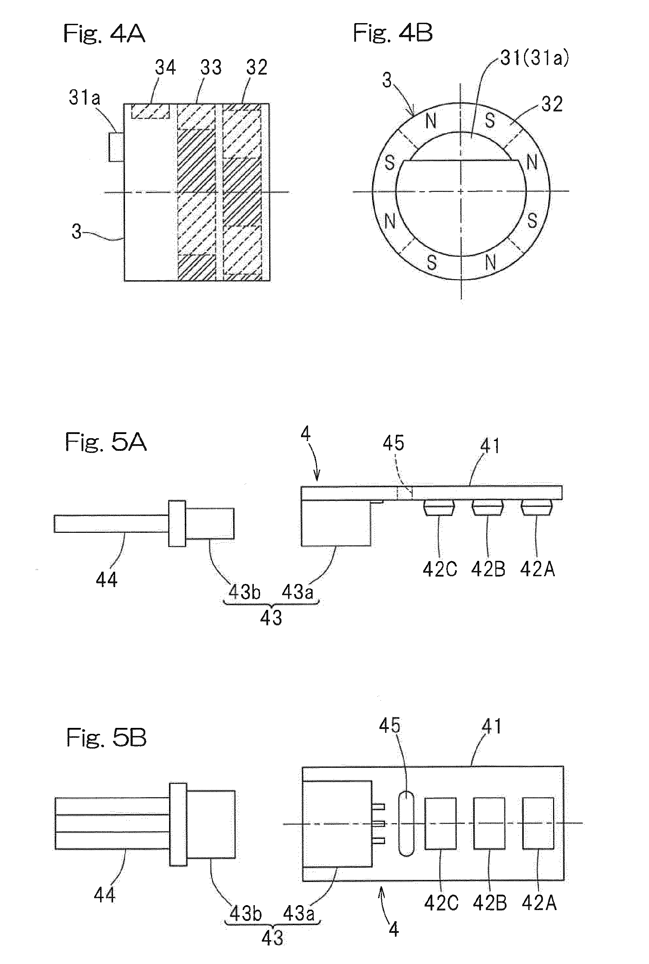

The first embodiment of the present invention will be described in connection with Fig. 1A and Fig. 1B through Fig. 5A and Fig. 5B. Referring to Fig. 1A and Fig. 1B, the rolling contact bearing device with rotation detection function includes a rolling bearing 1, a sensor housing 2, an encoder 3 and a sensor mount board 4. The rolling contact bearing device with rotation detection function may be used such that the rolling bearing 1 rotatably supports a shaft 5.

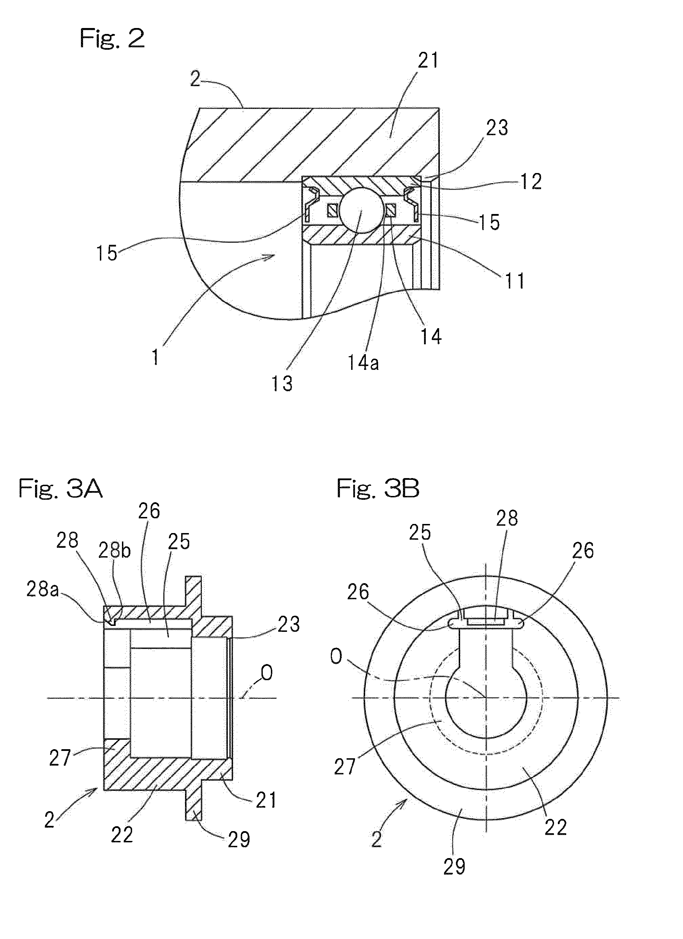

Referring to Fig. 2 which is a fragmentary enlarged view of Fig. 1A, the rolling bearing 1 may include an inner ring 11, an outer ring 12, and a plurality of rolling elements 13 interposed between the raceway surfaces of the inner and outer rings 11, 12. The rolling bearing 1 may include a deep groove ball bearing as illustrated, in which the rolling elements 13 are balls. The rolling elements 13 are retained by a retainer 14 in such a way that the rolling elements 13 are held in circumferentially arranged pockets of the retainer 14. The inner and outer rings 11, 12 may define a bearing space therebetween. An annular sealing member 15 is provided at both of the opposite ends of the bearing space to seal the bearing space. The sealing member 15 may be a non-contact seal including a metal plate which is fitted to the outer ring 12 and has a radially inner end positioned proximate to the inner ring 11. Such a configuration where a sealed bearing serves as the rolling bearing 1 as discussed above, can eliminate the need to supply a lubricant to the rolling bearing 1.

Referring to Fig. 3A and Fig. 3B, the sensor housing 2 may be an annular sensor housing that includes a segment forming a bearing mount segment 21 configured to mount the outer ring 12 (Fig. 2) of the rolling bearing 1. The sensor housing 2 also includes a segment forming an encoder accommodation segment 22 that is axially offset from the bearing mount segment 21. The encoder accommodation segment 22 is configured to accommodate the encoder 3. An inner diameter of the bearing mount segment 21 is slightly greater than an inner diameter of the encoder accommodation segment 22. Accordingly, the encoder 3 is detachably installed in the encoder accommodation segment 22, through an interior space of the bearing mount segment 21 when the rolling bearing 1 is not mounted to the bearing mount segment 21.

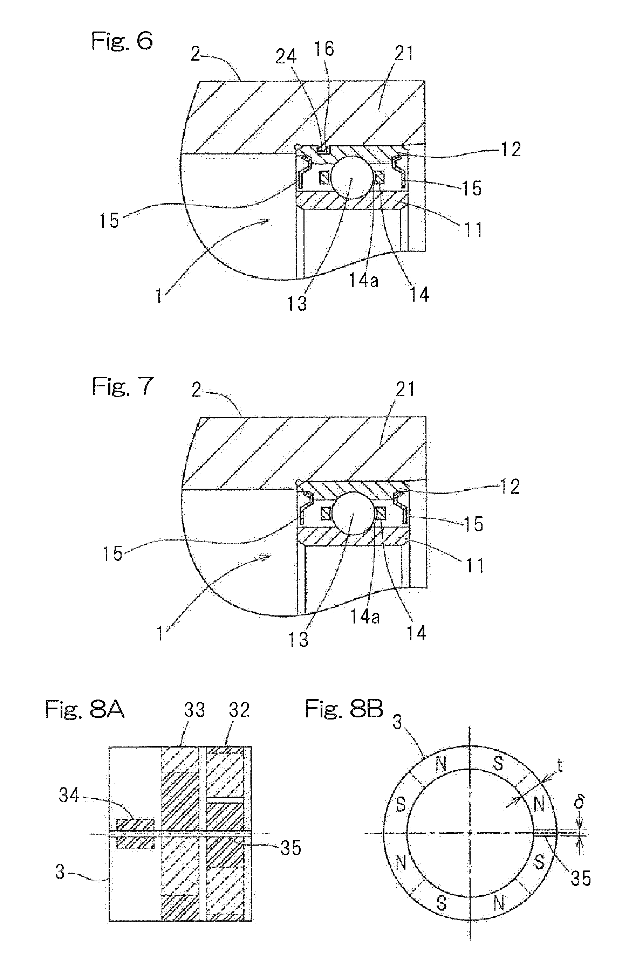

Referring to Fig. 3A, the bearing mount segment 21 has an inner peripheral surface, which at an end thereof facing away from the encoder accommodation segment 22, is slightly protruding radially inwards to form a lock portion 23. As shown in Fig. 2, the lock portion 23 is configured to lockingly engage an end face of the outer ring 12 that is mounted to the bearing mount segment 21, to axially lock the rolling bearing 1. In a variant as shown in Fig. 6, the outer ring 12 of the rolling bearing 1 may have an outer peripheral surface that includes a circumferential groove 16 formed therein, and the sensor housing 2 may include an engagement portion 24 that is in the form of a protrusion. The engagement portion 24 may be configured to engage the circumferential groove 16 to axially lock the rolling bearing 1. In another variant as shown in Fig. 7, the outer ring 12 of the rolling bearing 1 may be configured to be force-fitted to the bearing mount segment 21 of the sensor housing 2 to axially lock the rolling bearing 1.

Referring to Fig. 3A and Fig. 3B, the encoder accommodation segment 22 has an inner peripheral surface, circumferential part of which forms a board accommodation area 25. The board accommodation area 25 may be in the form of an axially extending groove. The board accommodation area 25 has a bottom (which corresponds to the upper end in Fig. 3A and Fig. 3B) which includes a pair of axially extending board insertion slots 26, each formed at the corresponding one of circumferential opposite sides of the bottom. The encoder accommodation segment 22 has an axial end that may project radially inwards to form an inner diameter collar area 27. The inner diameter collar area 27 may be cut out at a portion corresponding to the circumferential phase or location of the board accommodation area 25, such that the board accommodation area 25 axially extends penetratingly through the inner diameter collar area 27.

The board accommodation area 25 has an inner peripheral surface which protrudes, at an opening end of the board accommodation area 25, radially inwards to form a lock protrusion 28 configured to lock the sensor mount board 4 when the sensor mount board 4 is accommodated in the board accommodation area 25. The lock protrusion 28 may have an axially outer side facing surface 28a and an axially inner side facing surface 28b. The axially outer side surface 28a may form an inclined surface having an inner diameter that reduces gradually from an axially outer side of the surface 28a to an axially inner side of the surface 28a. The axially inner side surface 28b may form a vertical surface relative to a central axis O of the rolling contact bearing device with rotation detection function. The border area between the bearing mount segment 21 and the encoder accommodation segment 22 has an outer periphery provided with an outer diameter collar area 29.

Referring to Fig. 1A, the shaft 5 may be assembled, e.g., through force-fitting, in such a way to rotate integrally with the inner ring 11 of the rolling bearing 1. Referring to Fig. 1B, the encoder 3 is fitted to an axial portion of the shaft 5. That axial portion of the shaft 5 may have an outer peripheral surface, in a circumferential portion of which a flat surface portion 51 of a planar shape is formed. The flat surface portion 51 may be defined by a so-called D-cut shape. The flat surface portion 51 may start from an area of the shaft 5 where the encoder 3 is fitted to the shaft 5, terminating at an end face of the shaft 5.

Fig. 4A and Fig. 4B show the encoder 3. The encoder 3 is an annular one-piece component. More specifically, the encoder 3 has an annular shape and may be mounted on an outer periphery of the shaft 5 (see Figs. 1A and 1B), where the encoder 3 is axially positioned by the inner diameter collar area 27. Prior to mounting the rolling bearing 1 to the bearing mount segment 21, the encoder 3 is installed in the encoder accommodation segment 22, by inserting the encoder 3 through an interior space of the bearing mount segment 21. Subsequently, the shaft 5 may be fitted to an inner periphery of the encoder 3.

To prevent the encoder 3 from rotating relative to the shaft 5, the encoder 3 has an inner peripheral surface, part of which is projecting to form an engagement flat projection 31 having a flat surface end, and the engagement flat projection 31 is configured to engage the flat surface portion 51 of the shaft 5, such that the engagement portion 31 may, in entirety thereof, contact the flat surface portion 51. The engagement flat projection 31 may have, at an axial end thereof facing away from the rolling bearing 1, a protrusion portion 31a that is axially protruding with respect to an end face of the encoder 3.

The encoder 3 is made, in entirety thereof, of magnetic material or may be made of a resinous or metallic matrix and a magnetic material layer disposed on the matrix formed by, for example, coating. The encoder 3 is configured to have a magnetic force that is sufficient to be sensed by sensors 42A, 42B and 42C, which will be discussed later in detail. More specifically, referring to Fig. 4A, the encoder 3 has an outer periphery which may include axially arranged magnetized tracks formed thereon including a first annular magnetized track 32 configured for rotation detection, a second annular magnetized track 33 configured for rotation detection, and a magnetized track 34 configured for detection of point of origin.

Referring to Fig. 4B, the first magnetized track 32 may include N poles and S poles that are circumferentially arranged in alternate fashion with equal pole pitches. The second magnetized track 33, which may also include N poles and S poles that are circumferentially arranged in alternate fashion similarly in this respect to the first magnetized track 32, may differ from the first magnetized track 32 in phase or pole pitch. For instance, some of the circumferentially arranged magnetic poles may have large circumferential widths and the rest of the circumferentially arranged magnetic poles may have equal pole pitches.

Referring to Fig. 4A, the magnetized track 34 for detection of point of origin may include a single N pole or S pole which forms the aforementioned magnetized portion for detection of point of origin. The magnetized track 34 for detection of point of origin may be formed on the protrusion portion 31 a of the engagement flat projection 31.

Referring to Fig. 5A and 5B, the sensor mount board 4 may include a printed wiring board 41 that has a rectangular shape, may also include the sensors 42A, 42B and 42C mounted on the printed wiring board 41, and may also include other circuit components (not shown) mounted on the printed wiring board 41. In the example under discussion, the printed wiring board 41 may include a wiring pattern (not shown) that is formed on a surface thereof (e.g., a lower surface in Fig. 5A) that becomes a radially inwardly facing surface when the sensor mount board 4 is positioned in place. The sensors 42A, 42B and 42C may be disposed on the wiring pattern in corresponding relationship with the first magnetized track 32, the second magnetized track 33 and the magnetized track 34, respectively. A sensor 42A, 42B, 42C may include a magnetic sensor.

The printed wiring board 41 may mount, at an end thereof facing away from the rolling bearing 1, a socket component 43a, which forms a component of a wiring connector 43. The wiring connector 43 is configured to electrically connect the sensors 42A, 42B and 42C with electrical wire(s) 44 from an external component. The wiring connector 43 may include the aforementioned socket component 43a and a plug component 43b configured to detachably plug into the socket component 43a. The electrical wire(s) 44 may be attached to the plug component 43b. The printed wiring board 41 has a through hole 45 formed therein configured to engage the aforementioned lock protrusion 28 of the sensor housing 2.

Referring back to Fig. 1A, the sensor mount board 4 may be fitted into the board accommodation area 25 (Figs. 3A and 3B) which may be located between the encoder accommodation segment 22 and the encoder 3, by inserting the sensor mount board 4 into the board accommodation area 25 from a side of the rolling contact bearing device that is remoter from the rolling bearing 1. More specifically, circumferentially oriented opposite ends of the printed wiring board 41 is fitted into the pair of board insertion slots 26 (Fig. 1B), and the sensor mount board 4 is pushed towards the rolling bearing 1. After being pushed in the board accommodation area 25, the sensor mount board 4 may reach a predefined axial position at which the lock protrusion 28 of the sensor housing 2 engages the through hole 45 of the printed wiring board 41 to lock the sensor mount board 4. The axially outer side surface 28a of the lock protrusion 28 may form the aforementioned inclined surface, which, therefore, does not interrupt the pushing of the sensor mount board 4. The axially inner side surface 28b of the lock protrusion 28 may form a vertical surface relative to the central axis O, such as shown in Fig. 3A. The lock protrusion 28 having such a configuration can provide reliable locking of the sensor mount board 4, by engaging with the through hole 45 (Fig. 5A and Fig. 5B).

In a rolling contact bearing device with rotation detection function according to the aforementioned configuration, the sensor housing 2 includes axially arranged segments, namely, the bearing mount segment 21 and the encoder accommodation segment 22. An outer ring 12 of the rolling bearing 1 may be mounted to the bearing mount segment 21, while the encoder 3 and the sensor mount board 4 may be positioned in an interior space of the encoder accommodation segment 22. Such a configuration allows for easy separation of the rolling bearing 1 and the sensor mount board 4 from each other. This enables, when one of the rolling bearing 1 and the sensor mount board 4 fails or malfunctions, replacing only the failed or malfunctioning one and keeping the other non-failed or non-malfunctioning one for reuse.

More specifically, the rolling bearing 1 is detachably mounted, from a side of the rolling contact bearing device that is remoter from the encoder accommodation segment 22, to the bearing mount segment 21 of the sensor housing 2. In this way, the rolling bearing 1 may be detachably mounted, without being interrupted by components including the encoder 3. The sensor mount board 4 may be detachably fitted, from a side of the rolling contact bearing device that is remoter from the rolling bearing 1, into the board accommodation area 25. In this way, the sensor mount board 4 can be detachably fitted, without being interrupted by the rolling bearing 1. The sensor mount board 4 may includes, at an end thereof facing away from the rolling bearing 1, the aforementioned wiring connector 43. The wiring connector 43 makes it easier to detachably fit the sensor mount board 4 into the board accommodation area 25 that may be located between the encoder accommodation segment 22 and the encoder 3.

The engagement flat projection 31 of the encoder 3, which may serve to prevent the encoder 3 from rotating relative to the shaft 5, may have a protrusion portion 31a axially protruding with respect to an end face of the encoder 3. Such a configuration facilitates the phase alignment of the encoder 3 with the shaft 5. Such a protrusion portion 31a may also be used as an indication of the location of point of origin that can be visually confirmed.

Referring to Fig. 8A and Fig. 8B, the encoder 3 has a C-shaped cross section when cut perpendicularly to a central axis of the encoder 3, and the encoder 3 is configured to elastically deform in radially expanding fashion to mount to an outer periphery of the shaft 5 (Fig. 1A and Fig. 1B). The radial thickness t of the encoder 3 as well as the dimension δ of a circumferential gap 35 of the encoder 3 can be appropriately adjusted to minimize the expansion of the encoder 3 that may be caused by a centrifugal force during rotation, to keep a proper mounting force of the encoder 3. This allows the encoder 3 to remain fixed to the shaft 5 while maintaining an intended phase or angle at which the encoder 3 is mounted to the shaft 5. The circumferential gap 35 of the encoder 3 may define a point of origin of a circumferential phase of the encoder 3. This facilitates the visual confirmation of positioning of the point of origin. In the example under discussion, as a variant of the exemplary configuration shown in Fig. 4A, the magnetized track 34 configured for detection of point of origin may be formed on the encoder 3 about the midline of the circumferential gap 35.

Although in the aforementioned embodiment(s) three sensors 42A, 42B and 42C are provided, the number of sensor(s) mounted on the sensor mount board 4 and the number of magnetized track(s) formed on the encoder 3 is modified or reconfigured to equip the rolling contact bearing device with the aforementioned simple rotation detection function only, both the simple rotation detection function and the aforementioned rotational direction detection function, or additionally, the aforementioned point-of-origin detection function. The following Table 1 shows possible combinations:

**Table 1**

| | Number of Sensor(s)* | Number of Magnetized Track(s) | Magnetization for Point of Origin |
|---|---|---|---|
| Simple Rotation Detection | 1 | 1 | Unnecessary |
| Rotational Direction Detection | 2 | 1 or 2** | Unnecessary |
| Rotational Direction + Point-of-Origin Detection | 3 | 1 or 2** | Necessary |

| | | | |
|---|---|---|---|
| * It is assumed that one sensor is capable of detecting one phase. ** The number of magnetized track(s) is one implies when the corresponding sensors are circumferentially arranged, while the number of magnetized track(s) is two when the corresponding sensors are axially arranged. | | | |

Sensor mount boards 4 having the same construction or configuration with each other except for the wiring pattern on the printed wiring board 41, and/or encoders 3 having the same appearance with each other can be compatibly used when modifying or reconfiguring the number of sensor(s) and the number of magnetized track(s) in the aforementioned manner. This in turn allows for using the same sensor housing 2 even when modifying or reconfiguring the sensor mount board 4 and/or the encoder 3.

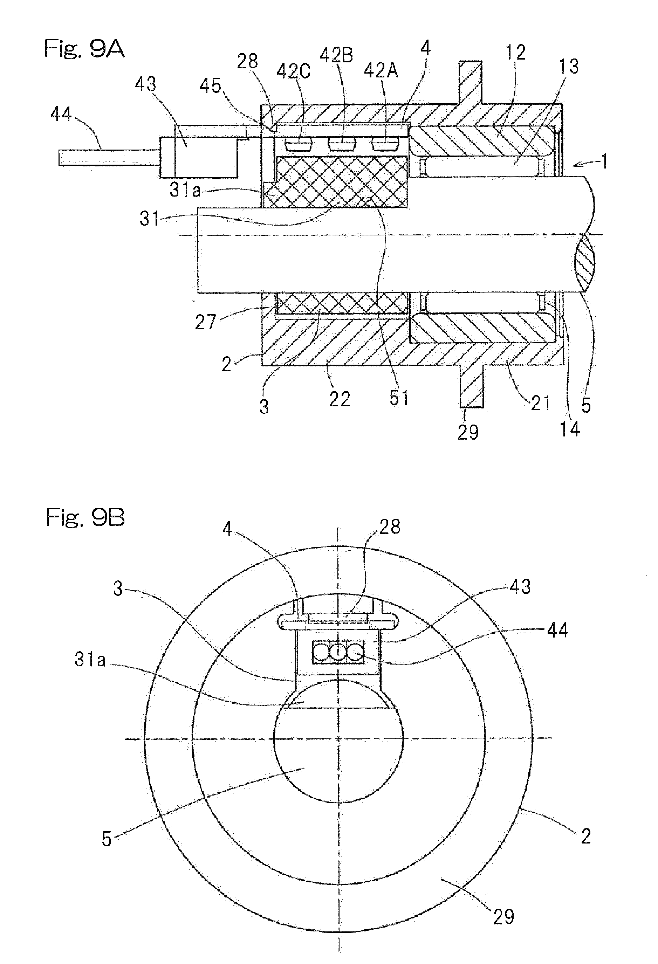

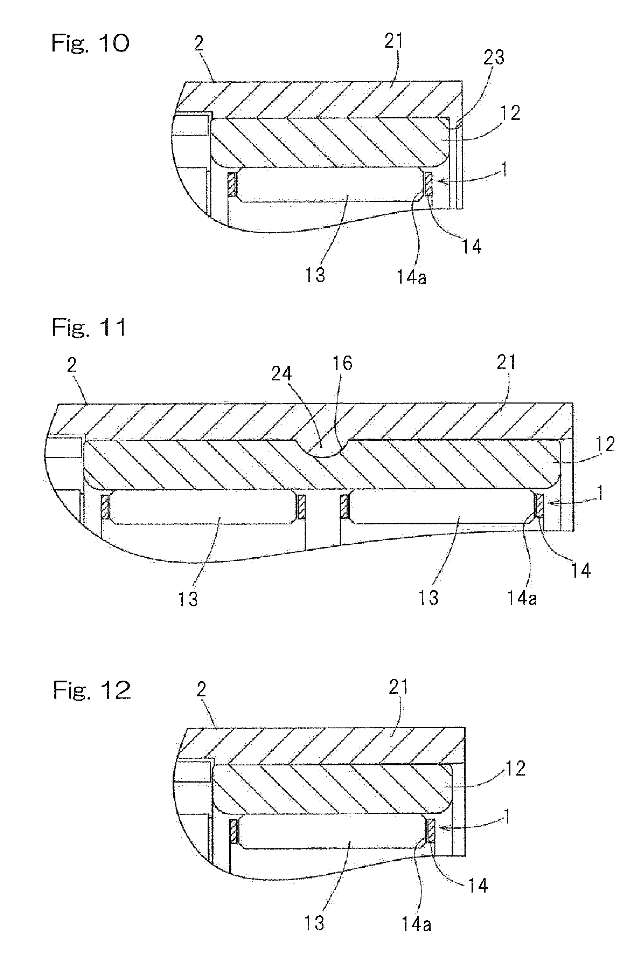

Fig. 9A, Fig. 9B and Fig. 10 show the second embodiment of the present invention. Similarly to a rolling contact bearing device with rotation detection function, according to the first embodiment, a rolling contact bearing device with rotation detection function, according to the second embodiment, also includes a rolling bearing 1, a sensor housing 2, an encoder 3 and a sensor mount board 4. The second embodiment differs from the first embodiment in that the rolling bearing 1 comprises a roller bearing such as a needle roller bearing which does not include an inner ring. Other features of the second embodiment are the same as the corresponding features of the first embodiment, thus providing the same or similar effects of advantages as in the first embodiment.

The rolling bearing 1 may include a roller bearing which includes an outer ring 12 and a plurality of rolling elements 13 which are rollers such as needle rollers. The rolling elements 13 may be retained by a retainer 14 in such a way that the rolling elements 13 are held in circumferentially arranged pockets 14a of the retainer 14. The bearing mount segment 21 of the sensor housing 2 is configured to mount the outer ring 12 of the rolling bearing 1. The rolling elements 13 is configured to come into rotatable abutment with an outer peripheral surface of the shaft 5.

As is the case with the rolling bearing 1 comprising a ball bearing such as the aforementioned deep groove ball bearing, the rolling bearing 1 including a needle roller bearing can also be axially locked. Referring to Fig. 10, in the example under discussion, the bearing mount segment 21 has an inner peripheral surface, which at an end thereof facing away from the encoder accommodation segment 22, is slightly protruding radially inwards to form a lock portion 23. The lock portion 23 is configured to lockingly engage an end face of the outer ring 12, to axially lock the rolling bearing 1. In a variant as shown in Fig. 11, the outer ring 12 of the rolling bearing 1 may have an outer peripheral surface that may include a circumferential groove 16 formed therein, and the sensor housing 2 may include an engagement portion 24 that may be in the form of a protrusion. The engagement portion 24 may be configured to engage the circumferential groove 16 to axially lock the rolling bearing 1. Although in the example of Fig. 11 a rolling bearing 1 with double rows of rolling elements 13 is shown, the illustrated locking mechanism may also be applied to a rolling bearing 1 with a single row of rolling elements 13. In another variant as shown in Fig. 12, the outer ring 12 of the rolling bearing 1 may be configured to be force-fitted to the bearing mount segment 21 of the sensor housing 2 to axially lock the rolling bearing 1.

Although the present invention has been described in connection with preferred embodiments with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Signs]

- 1:: Rolling bearing
- 12:: Outer ring
- 14:: Retainer
- 16:: Circumferential groove
- 2:: Sensor housing
- 3:: Encoder
- 4:: Sensor mount board
- 5:: Shaft
- 21:: Bearing mount segment
- 22:: Encoder accommodation segment
- 23:: Lock portion
- 24:: Engagement portion
- 31:: Engagement flat projection
- 31a:: Protrusion portion
- 32:: First magnetized track for rotation detection
- 33:: Second magnetized track for rotation detection
- 34:: Magnetized track for point-of-origin detection (Magnetized portion for point-of-origin detection)
- 42A, 42B, 42C:: Sensor
- 43:: Wiring connector
- 44:: Electrical wire(s)
- 51:: Flat surface portion
- O:: Central axis

## Claims

1. A rolling contact bearing device with rotation detection function, the rolling contact bearing device comprising:
a rolling bearing configured to come in contact with an outer peripheral surface of a shaft;
an annular sensor housing including an axial segment forming a bearing mount segment configured to mount an outer ring of the rolling bearing, the sensor housing also including a segment forming an encoder accommodation segment that is axially offset from the bearing mount segment;
an encoder configured to be positioned in an interior space of the encoder accommodation segment in such a way to rotate integrally with the shaft; and
a sensor mount board configured to be positioned between the encoder accommodation segment and the encoder, the sensor mount board including a sensor mounted thereon to sense the encoder.

2. The rolling contact bearing device as claimed in claim 1, wherein the sensor mount board includes, at an end thereof facing away from the rolling bearing, a wiring connector configured to electrically connect the sensor with an electrical wire from an external component, and wherein the sensor mount board is configured to be detachably installed between the encoder accommodation segment and the encoder.

3. The rolling contact bearing device as claimed in claim 1, wherein the sensor mount board is configured to be detachably installed, from a side of the rolling contact bearing device that is remoter from the rolling bearing, between the encoder accommodation segment and the encoder.

4. The rolling contact bearing device as claimed in claim 1, wherein the rolling bearing is configured to be detachably mounted, from a side of the rolling contact bearing device that is remoter from the encoder accommodation segment, to the bearing mount segment of the sensor housing.

5. The rolling contact bearing device as claimed in claim 4, wherein the encoder is configured to be detachably installed in the encoder accommodation segment, through an interior space of the bearing mount segment when the rolling bearing is not mounted to the bearing mount segment of the sensor housing.

6. The rolling contact bearing device as claimed in claim 4, wherein the sensor housing includes a lock portion configured to lockingly engage an end face of the outer ring of the rolling bearing to axially lock the rolling bearing.

7. The rolling contact bearing device as claimed in claim 4, wherein the outer ring has an outer peripheral surface including a circumferential groove formed therein, and wherein the sensor housing includes an engagement portion configured to engage the circumferential groove to axially lock the rolling bearing.

8. The rolling contact bearing device as claimed in claim 4, wherein the outer ring is configured to be force-fitted to the bearing mount segment of the sensor housing to axially lock the rolling bearing.

9. The rolling contact bearing device as claimed in claim 1, wherein the encoder has an annular shape, wherein the encoder has an inner peripheral surface, provided with an engagement flat projection having a flat surface end, protruding from a portion defined circumferentially of the inner peripheral surface and wherein the engagement flat projection is configured to engage a flat surface portion of a planar shape formed in a portion defined circumferentially of an outer peripheral surface of the shaft.

10. The rolling contact bearing device as claimed in claim 9, wherein the engagement flat projection of the encoder has a portion axially protruding with respect to an end face of the encoder.

11. The rolling contact bearing device as claimed in claim 1, wherein the encoder has a C-shaped cross section when cut perpendicularly to a central axis of the encoder, and wherein the encoder is configured to elastically deform in radially expanding fashion to mount on an outer periphery of the shaft.

12. The rolling contact bearing device as claimed in claim 11, wherein the encoder has a circumferential gap defining a point of origin of a circumferential phase of the encoder.

13. The rolling contact bearing device as claimed in claim 1, wherein the encoder includes an annular magnetized track configured for rotation detection including circumferentially arranged magnetic poles.

14. The rolling contact bearing device as claimed in claim 1, wherein the encoder includes a plurality of annular magnetized tracks for rotation detection, each including circumferentially arranged magnetic poles, the magnetized tracks for rotation detection differing in phase or pole pitch, and wherein the sensor comprises a plurality of sensors, each configured to sense corresponding one of the magnetized tracks for rotation detection.

15. The rolling contact bearing device as claimed in claim 1, wherein the encoder includes a circumferential portion forming a magnetized portion for detection of point of origin, and wherein the sensor comprises a sensor configured to sense the magnetized portion for detection of point of origin.

16. The rolling contact bearing device as claimed in claim 1, wherein the rolling bearing comprises a roller bearing including the outer ring, a retainer and rollers, and wherein the rollers are configured to come in contact with the shaft.

17. The rolling contact bearing device as claimed in claim 1, configured to support a shaft in an office machine.
